# EUROPÄISCHE PATENTANMELDUNG

(11) **EP 1 083 403 A1**
(43) Veröffentlichungstag der Anmeldung: **14.03.2001**
(21) Anmeldenummer: 00810687.4
(22) Anmeldetag: 31.07.2000
(51) Int. Cl.: G01B 13/24

(54) **Verfahren sowie Anordnung zum Ermitteln des Biegewinkels von Werkstücken**

(30) Priorität: 08.09.1999 CH 163099
(71) Anmelder: Bystronic Laser AG, 5200 Brugg (CH)
(72) Erfinder: Heingärtner, Jörg, 6710 Nenzing (CH); Houska, Jaroslav, 5443 Niederohrdorf (CH)
(74) Vertreter: Rottmann, Maximilian R.

(57) **Zusammenfassung**

Es wird ein Verfahren sowie eine Anordnung zum Bestimmen des Biegewinkels (α) von mittels einer einen Stempel (2) und eine Matrize (3) aufweisenden Biegeeinrichtung (1) gebogenen Werkstücken (5) vorgeschlagen. Dazu ist die Matrize (3) mit zumindest zwei Kanälen (9, 10, 11, 12) versehen, über welche Luft in Richtung eines Schenkels (5a, 5b) des gebogenen Werkstücks (5) ausgeblasen wird. Zum Erfassen des in den Kanälen (9, 10, 11, 12) vorherrschenden Drucks sind Druckaufnehmer (15a) vorgesehen, welche an einer Steuer- und Auswerteeinheit (16) angeschlossen sind. Aufgrund der Messwerte und unter Zuhilfenahme von Formeln, Tabellen, Kennfeldern oder eines neuronalen Netzes kann die Steuer- und Auswerteeinheit (16) den Biegewinkel (α) ermitteln.

## Beschreibung

Die Erfindung betrifft ein Verfahren zum Ermitteln des Biegewinkels von Werkstücken nach dem Oberbegriff des Patentanspruchs 1, sowie eine Anordnung zur Durchführung des Verfahrens gemäss dem Anspruch 12.

Es ist bekannt, dass beim Biegen von Werkstücken Winkelfehler durch Materialeinflüsse auftreten. Deshalb sind verschiedenartigste Verfahren und Vorrichtungen zum Messen des effektiven Biegewinkels bekannt.

Am häufigsten wird der Biegewinkel mittels mechanischen Tastelementen gemessen, welche von unten oder von oben an das gebogene Werkstück herangeführt werden. Weiter sind auch optische Messsysteme bekannt, welche mit Auflicht, Durchlicht oder Laserlicht arbeiten.

Praktisch alle bekannten Messverfahren schränken die Biegefreiheit und die messbare Teilegeometrie mehr oder weniger ein. Die Vorrichtungen sind meistens im Biegebereich montiert oder werden von oben oder unten an die Messstelle herangeführt. Dieser Nachteil ist neben der relativ grossen Messungenauigkeit dafür verantwortlich, dass gekaufte Messsysteme relativ selten eingesetzt werden.

Es ist somit die Aufgabe der Erfindung, ein Verfahren zum Ermitteln des Biegewinkels von Werkstücken nach dem Oberbegriff des Patentanspruchs 1 vorzuschlagen, welches einfach, universell und unempfindlich in der Anwendung ist, und mittels welchem der Biegewinkel sehr genau und schnell ermittelt werden kann.

Diese Aufgabe wird durch die im Kennzeichen des Anspruchs 1 angeführten Verfahrensschritte gelöst.

Indem die Lage von zumindest einem Schenkel des gebogenen Werkstücks in Bezug auf die Matrize an zumindest zwei Stellen direkt oder indirekt erfasst wird und aufgrund der erfassten Werte sowie von abgespeicherten Referenz-Werten der Biegewinkel ermittelt wird, kann der Biegewinkel sehr genau und schnell ermittelt werden, da in diesem Fall nicht die absolute Messgenauigkeit wichtig ist, sondern vielmehr die Reproduzierbarkeit des Messverfahrens. Als abgespeicherte Referenz-Werte können beispielsweise Messwerte herangezogen werden, welche beim Biegen eines Referenz-Werkstücks aufgenommen wurden, indem ein Referenz-Werkstück kontinuierlich oder in Stufen gebogen und die dem jeweiligen Biegewinkel zugehörigen Messwerte erfasst und beispielsweise in Form eine Tabelle abgespeichert wurden.

Vorzugsweise wird die Lage des Schenkels des Werkstücks sowohl oberhalb wie auch unterhalb der Biegekante der Matrize erfasst. Dadurch kann die Mess-Genauigkeit gesteigert werden und zwar insbesondere auch bei sehr kleinen oder sehr grossen Biege-Winkeln.

Bevorzugte Ausführungsformen des Verfahrens sind in den abhängigen Ansprüchen 2 bis 11 umschrieben.

Im Anspruch 12 wird zudem eine Anordnung zur Durchführung des Verfahrens definiert.

Bevorzugte Ausführungsformen der Anordnung sind in den abhängigen Ansprüchen 13 bis 20 umschrieben.

Nachfolgend wird die Erfindung anhand von zwei Zeichnungen näher erläutert. Dabei zeigt:
Fig. 1 ein erstes Ausführungsbeispiel der Erfindung, und
Fig. 2 ein alternatives Ausführungsbeispiel der Erfindung.

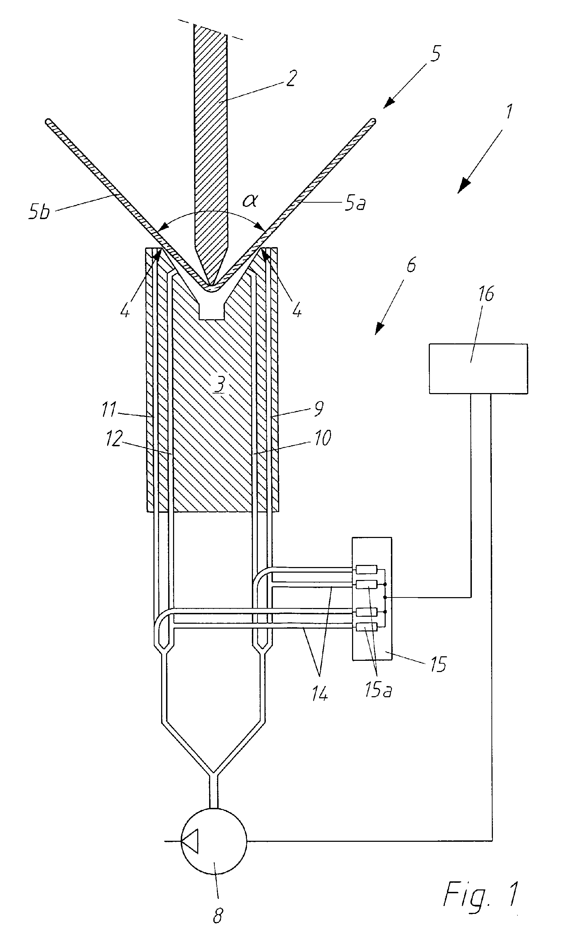

Figur 1 zeigt ein erstes Ausführungsbeispiel der Erfindung. Von der gesamthaft mit 1 bezeichneten Biegeeinrichtung sind lediglich der Stempel 2 sowie die Matrize 3 eingezeichnet. Die Matrize 3 weist eine im wesentlichen V-förmigen Ausnehmung auf, welche am oberen Ende von einer Biegekante 4 begrenzt wird. Wenn von Biegkante gesprochen wird, so ist darunter nicht eine scharfe Kante im herkömmlichen Sinn sondern vielmehr eine abgerundete Fläche zu verstehen, wie sie bei Matrizen üblich ist. Das zu biegende Werkstück trägt das Bezugszeichen 5. Eine Anordnung zum Ermitteln des Biegewinkels des Werkstücks 5 ist gesamthaft mit 6 bezeichnet. Diese Anordnung umfasst eine Pumpe 8, welche mit vier in die Matrize 3 eingelassenen Kanälen 9, 10, 11, 12 in Wirkverbindung steht. Die vier Kanäle 9, 10, 11, 12 weisen im Bereich der Matrizenoberseite je eine Austrittsöffnung auf, über welche die von der Pumpe 8 geförderte Luft in Richtung des Werkstücks 5 ausgeblasen werden kann. Die Kanäle 9, 10, 11, 12 münden unter einem rechten Winkel aus der jeweiligen Fläche der Matrize 3. Zur Messung des in den Kanälen 9, 10, 11, 12 vorherrschenden Drucks ist eine Druckaufnehmereinheit 15 vorgesehen, welche über Leitungen 14 mit den Kanälen 9, 10, 11, 12 verbunden ist. Die Druckaufnehmereinheit 15 weist vorzugsweise vier separate Druckaufnehmer 15a auf, mittels welchen der Druck in jedem Kanal 9, 10, 11, 12 separat erfasst werden kann. Zur Auswertung der Messdaten ist eine Steuer- und Auswerteeinheit 16 vorgesehen.

Der eigentliche Biegevorgang und die Ermittlung des Biegewinkels a stellt sich wie folgt dar: Das Werkstück 5 wird durch Eindringen des Stempels 2 in die Matrize 3 soweit gebogen, dass der von den beiden Schenkeln 5a, 5b eingeschlossene Winkel a möglichst genau dem angestrebten Biegewinkel nach dem Rückfedern entspricht, ohne jedoch das Werkstück zu überbiegen. Während des Biegevorgangs wird der Biegewinkel α kontinuierlich gemessen. Dazu aktiviert die Steuer- und Auswerteeinheit 16 die Pumpe 8, so dass über die Kanäle 9, 10, 11, 12 Luft ausgeblasen wird. Aufgrund der von den Druckaufnehmern 15a erfassten Messwerte und unter Zuhilfenahme von Formeln, Tabellen, Kennfeldern oder eines neuronalen Netzes wird der Biegewinkel α errechnet. Nachdem der Stempel 2 die errechnet oder gemessen unterste Position erreicht hat, wird der Entlastungsvorgang eingeleitet indem der Stempel 2 nach oben verfahren wird. Während dieses Entlastungsvorgangs werden die von den Druckaufnehmern 15a abgegeben Signale ebenfalls erfasst. Sobald die Messsignale keine Veränderung mehr aufweisen bzw. sich die Messsignale pro Zeiteinheit um nicht mehr als einen vorgegebenen Maximalbetrag verändern, wird der Entlastungsvorgang gestoppt, da nunmehr davon ausgegangen werden kann, dass das Werkstück 5 vollständig rückgefedert ist. Indem die Rückbewegung des Stempels 2 gestoppt wird, unmittelbar nachdem keine Veränderung der Messsignale mehr auftritt, bleibt das Werkstück 5 vom Stempel 2 in einer zentrierten Position in der Matrize 3 gehalten.

Nun wird der effektive Biegewinkel a ermittelt indem der in den Kanälen 9, 10, 11, 12 vorherrschende Druck erfasst und unter Zuhilfenahme von Formeln, Tabellen, Kennfeldern oder eines neuronalen Netzes der effektive Biegewinkel α errechnet wird. Aufgrund des gemessenen Biegewinkels α wird entschieden, ob der Biegevorgang ggf. fortgesetzt werden muss, um das Werkstück 5 in die endgültige Form zu biegen. Danach kann die Messung des Biegewinkels α ggf. in der vorgängig beschriebenen Weise wiederholt werden.

Indem sich, je nach Biegewinkel α des Werkstücks 5, ein unterschiedlicher Abstand des Werkstückschenkels 5a, 5b von der Austrittsöffnung des jeweiligen Kanals 9, 10, 11, 12 einstellt, verändert sich sowohl der Absolut- wie auch der Differenzdruck in den Kanälen 9, 10, 11, 12. Aufgrund des ermittelten Drucks bzw. der erfassten Messwerte kann auf die Lage der Werkstückschenkel 5a, 5b in Bezug auf die Matrize 3 geschlossen werden. Daraus kann nun, wie bereits ausgeführt, mittels geeigneten Formeln, Kennfeldern oder Tabellen der effektive Biegewinkel α des Werkstücks 5 ermittelt werden. Eine andere Variante besteht darin, dass ein neuronales Netz zur Ermittlung des Biegewinkels α herangezogen wird. Währenddem beim Vorsehen von nur einem Kanal pro Schenkel 5a, 5b der absolute Druck als Mass für den Biegewinkel a herangezogen werden muss, kann beim Vorsehen von zwei -oder auch mehr-Kanäle 9, 10, 11, 12 sowohl der absolute wie auch der Differenzdruck als Mass für den Biegewinkel α herangezogen werden. Mit dem gezeigten Ausführungsbeispiel kann, im Gegensatz zum nachfolgenden Beispiel, wo Sensoren zum Messen des Abstands bzw. der Lage eines Schenkels 5a, 5b verwendet werden, die Lage des jeweiligen Schenkels 5a, 5b in Bezug auf die Matrize 3 nur indirekt erfasst werden, indem über den am jeweiligen Druckaufnehmer 15a anstehenden Druck auf die Lage bzw. den Abstand des jeweiligen Schenkels 5a, 5b von der Austrittsöffnung geschlossen werden muss.

Vom flachen bis zum gebogenen Werkstück verändert sich der Abstand der Austrittsöffnungen zum Werkstück nach bestimmten Funktionen. Die Funktion der unterhalb der Biegekante 4 angeordneten Austrittsöffnung ist dabei anders als die Funktion der oberhalb der Biegekante angeordneten Austrittsöffnung.

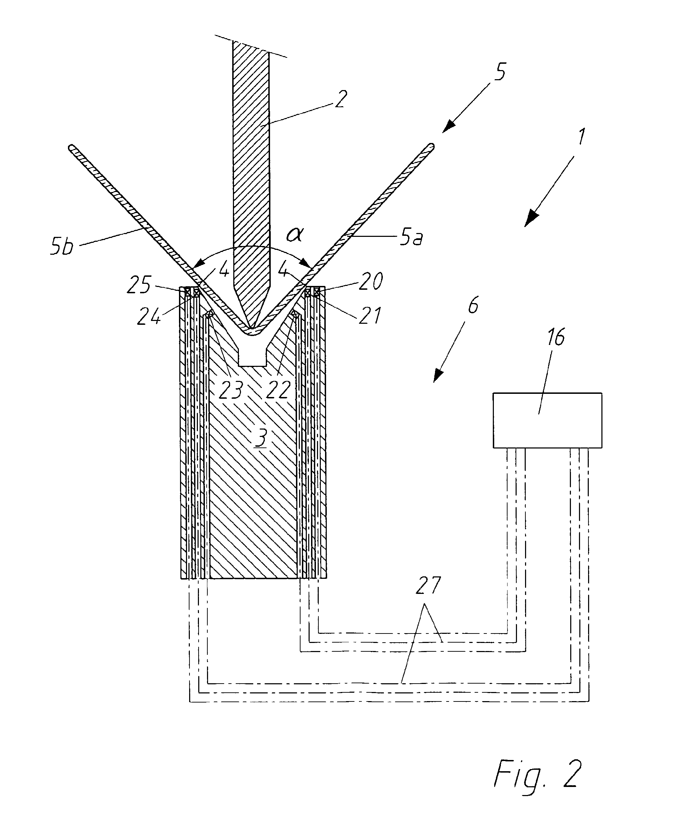

In der Figur 2 ist ein alternatives Ausführungsbeispiel der Erfindung dargestellt. Anstelle von Kanälen zum Zuführen von Druckluft sind in diesem Fall sechs Sensoren 20, 21, 22; 23, 24, 25 vorgesehen, welche schematisch dargestellt sind. Die Sensoren 20, 21, 22; 23, 24, 25 sind in der Matrize 3 aufgenommen. Beispielsweise können kapazitiv-, induktiv-, optisch- oder auf dem Prinzip von Ultraschall arbeitende Sensoren 20, 21, 22; 23, 24, 25 vorgesehen werden. Im vorliegenden Beispiel sind jedem Werkstückschenkel 5a, 5b drei Sensoren 20, 21, 22; 23, 24, 25 zugeordnet, wobei jeweils ein Sensor 22, 23 unterhalb und ein Sensor 20, 25 oberhalb der Biegekante 4 angeordnet ist und wobei jeweils ein Sensor 21, 24 im Bereich der Biegekante 4 der Matrize 3 angeordnet ist. Die Sensoren 20, 21, 22; 23, 24, 25 sind über schematisch dargestellte Leitungen 27 mit der Auswerteeinheit 16 verbunden. Auch in diesem Fall können sowohl die Einzelwerte wie auch die Differenzwerte zur Ermittlung des Biegewinkels α herangezogen werden. Das Biegeverfahren als solches kann in der vorgängig beschriebenen Weise durchgeführt werden, wobei auch in diesem Fall vorzugsweise Formeln, Tabellen, Kennfelder oder ein neuronales Netz zur Ermittlung des Biegewinkels (α) herangezogen werden.

Bei langen Werkstücken kann es darüber hinaus durchaus vorteilhaft sein, wenn über die Längsausdehnung des Werkstücks 5 -entlang der Biegelinie- verteilt eine Mehrzahl von Austrittsöffnungen vorgesehen ist, so dass der Biegewinkel α an mehreren Stellen ermittelt und die Biegetoleranz über die Länge festgestellt werden kann.

Eine derartige Anordnung 6 ist einfach aufgebaut und grenzt weder den Biegeprozess noch die Teilegeometrie ein. Die Anordnung 6 sowie das beanspruchte Verfahren sind universell einsetzbar und unempfindlich in der Anwendung. Zudem kann der Biegewinkel sehr genau und schnell ermittelt werden.

Es versteht sich, dass im Rahmen des in den Patentansprüchen definierten Schutzumfangs von vorgängigem Beispiel abweichende Verfahren sowie Anordnungen möglich sind.

## Patentansprüche

1. Verfahren zum Bestimmen des Biegewinkels (a) von mittels einer einen Stempel (2) und eine Matrize (3) aufweisenden Biegeeinrichtung (1) gebogenen Werkstücken (5), **dadurch gekennzeichnet**, dass die Lage von zumindest einem Schenkel (5a, 5b) des gebogenen Werkstücks (5) in Bezug auf die Matrize (3) an zumindest zwei Stellen direkt oder indirekt erfasst wird und dass aufgrund der erfassten Werte sowie von abgespeicherten Referenz-Werten der Biegewinkel (α) ermittelt wird.

2. Verfahren nach Anspruch 1, dadurch gekennzeichnet, dass die Lage des Schenkels bzw. der Schenkel (5a, 5b) sowohl oberhalb wie auch unterhalb der Biegekante (4) der Matrize (3) erfasst wird.

3. Verfahren nach Anspruch 1 oder 2, dadurch gekennzeichnet, dass die Lage des Schenkels bzw. der Schenkel (5a, 5b) sowohl oberhalb wie auch unterhalb wie auch im Bereich der Biegekante (4) der Matrize (3) erfasst wird.

4. Verfahren nach einem der vorhergehenden Ansprüche, dadurch gekennzeichnet, dass die Lage beider Schenkel (5a, 5b) in Relation zur Matrize (3) erfasst wird.

5. Verfahren nach einem der vorhergehenden Ansprüche, dadurch gekennzeichnet, dass über zumindest zwei Kanäle (9, 10, 11, 12) Luft in Richtung eines Schenkels (5a, 5b) des gebogenen Werkstücks (5) ausgeblasen und der Druck in den Kanälen (9, 10, 11, 12) erfasst und als Mass für die Lage des Schenkels bzw. der Schenkel (5a, 5b) herangezogen wird.

6. Verfahren nach einem der Ansprüche 1 bis 4, dadurch gekennzeichnet, dass die Lage des Schenkels bzw. der Schenkel (5a, 5b) kapazitiv, induktiv, optisch oder mittels Ultraschall erfasst wird.

7. Verfahren nach einem der Ansprüche 1 bis 5, dadurch gekennzeichnet, dass zumindest ein Werkstückschenkel (5a, 5b) über in die Matrize (3) eingelassene Kanäle (9, 10, 11, 12) mit Luft angeblasen wird und dass aufgrund der in den Kanälen (9, 10, 11, 12) gemessenen Absolut- und/oder Differenzdrücke bzw. des Differenzdrucks der Biegewinkel (a) mittels einer Auswerteeinheit (16) ermittelt wird, wobei zur Ermittlung Formeln, Tabellen, Kennfelder oder ein neuronales Netz herangezogen wird/werden.

8. Verfahren nach Anspruch 4, dadurch gekennzeichnet, dass beide Werkstückschenkel (5a; 5b) über je zumindest zwei Kanäle (9, 10; 11, 12) mit Luft angeblasen werden, wobei jeder Schenkel (5a; 5b) sowohl unterhalb wie auch oberhalb der Auflagekante (4) der Matrize (3) angeblasen wird, und wobei zumindest der Differenzdruck zwischen zwei einem Schenkel (5a; 5b) zugeordneten Kanälen (9, 10; 11, 12) zur Bestimmung des Biegewinkels (a) herangezogen wird.

9. Verfahren nach Anspruch 6, dadurch gekennzeichnet, dass die Lage zumindest eines Schenkels (5a, 5b) mittels in der Matrize (3) aufgenommenen Sensoren (20, 21, 22, 23, 24, 25) erfasst wird und dass aufgrund des gemessenen Absolut- und/oder Differenzwerts bzw. der gemessenen Absolut- und/oder Differenzwerte der Biegewinkel (a) mittels einer Auswerteeinheit (16) ermittelt wird, wobei zur Ermittlung Formeln, Tabellen, Kennfelder oder ein neuronales Netz herangezogen wird/werden.

10. Verfahren nach Anspruch 6 oder 9, dadurch gekennzeichnet, dass die Lage beider Werkstückschenkel (5a; 5b) mittels je zumindest zwei Sensoren (20, 21, 22; 23, 24, 25) erfasst wird, wobei die Lage jedes Schenkel (5a; 5b) sowohl unterhalb wie auch oberhalb der Auflagekante (4) der Matrize (3) erfasst wird, und wobei zumindest der Differenzwert zwischen zwei einem Schenkel (5a; 5b) zugeordneten Sensoren (20, 21, 22; 23, 24, 25) zur Bestimmung des Biegewinkels (a) herangezogen wird.

11. Verfahren nach einem der vorhergehenden Ansprüche, dadurch gekennzeichnet, dass über die Länge der Biegelinie des Werkstücks (5) verteilt der Biegewinkel (a) an mehreren Stellen ermittelt wird.

12. Anordnung (6) zur Durchführung des Verfahrens nach Anspruch 1, **dadurch gekennzeichnet**, dass an unterschiedlichen Stellen der Matrize (3) Mittel (9, 10, 11, 12; 20, 21, 22, 23, 24, 25) zum direkten oder indirekten Erfassen der Lage von zumindest einem Schenkel (5a, 5b) des Werkstücks (5) angeordnet sind, und dass eine Auswerteeinheit (16) zum Berechnen des Biegewinkels aufgrund der erfassten sowie von abgespeicherten Referenz-Werten vorgesehen sind.

13. Anordnung (6) nach Anspruch 12, dadurch gekennzeichnet, dass die Matrize (3) mit zumindest zwei, im Bereich der Matrizenoberseite eine Austrittsöffnung aufweisenden Kanälen (9, 10, 11, 12) versehen ist, welche mit einem Druckerzeuger (8) oder einem Druckspeicher verbunden sind, wobei Drucksensoren (15a) zum Erfassen des in den Kanälen (9, 10, 11, 12) vorherrschenden Drucks vorgesehen sind.

14. Anordnung (6) nach Anspruch 12 oder 13, dadurch gekennzeichnet, dass zumindest zwei in die Matrize (3) eingelassene, einem Werkstückschenkel (5a, 5b) zugeordnete Kanäle (9, 10, 11, 12) vorgesehen sind, wobei die Austrittsöffnung von zumindest einem Kanal (10, 12) unterhalb und von zumindest einem Kanal (9, 11) oberhalb der Biegekante (4) der Matrize (3) angeordnet ist.

15. Anordnung (6) nach Anspruch 12 oder 13, dadurch gekennzeichnet, dass zumindest drei in die Matrize (3) eingelassene, einem Werkstückschenkel (5a, 5b) zugeordnete Kanäle vorgesehen sind, wobei die Austrittsöffnung von zumindest einem Kanal unterhalb und von zumindest einem Kanal oberhalb der Biegekante (4) angeordnet ist und wobei zumindest eine Austrittsöffnung im Bereich der Biegekante (4) der Matrize (3) angeordnet ist.

16. Anordnung (6) nach einem der Ansprüche 12 bis 15, dadurch gekennzeichnet, dass pro Werkstückschenkel (5a; 5b) zumindest zwei Kanäle (9, 10; 11, 12) vorgesehen sind.

17. Anordnung (6) nach Anspruch 12, dadurch gekennzeichnet, dass zumindest zwei in die Matrize (3) eingelassene, einem Werkstückschenkel (5a, 5b) zugeordnete Sensoren (20, 21, 22, 23, 24, 25) vorgesehen sind, wobei zumindest ein Sensor (22, 23) unterhalb und zumindest ein Sensor (20, 25) oberhalb der Biegekante (4) der Matrize (3) angeordnet ist.

18. Anordnung (6) nach Anspruch 12, dadurch gekennzeichnet, dass zumindest drei in die Matrize (3) eingelassene, einem Werkstückschenkel (5a, 5b) zugeordnete Sensoren (20, 21, 22, 23, 24, 25) vorgesehen sind, wobei zumindest ein Sensor (22, 23) unterhalb und zumindest ein Sensor (20, 25) oberhalb der Biegekante (4) angeordnet ist und wobei zumindest eine Sensor (21, 24) im Bereich der Biegekante (4) der Matrize (3) angeordnet ist.

19. Anordnung (6) nach Anspruch 12, dadurch gekennzeichnet, dass die Mittel zum direkten Erfassen der Lage von zumindest einem Schenkel (5a, 5b) des Werkstücks (5) kapazitiv-, induktiv- oder optisch wirkende oder auf dem Prinzip von Ultraschall basierende Sensoren (20, 21, 22, 23, 24, 25) umfassen.

20. Anordnung (6) nach einem der Ansprüche 12 bis 19, dadurch gekennzeichnet, dass die Auswerteeinheit (16) ein neuronales Netz und/oder Speichermedien zur Verwaltung von Formeln, Tabellen oder Kennfeldern aufweist.
